# EUROPÄISCHE PATENTSCHRIFT

(11) **EP 2 006 835 B1**
(45) Veröffentlichungstag und Bekanntmachung des Hinweises auf die Patenterteilung: **01.12.2010**
(21) Anmeldenummer: 08104216.0
(22) Anmeldetag: 02.06.2008
(51) Int. Cl.: G10L 15/22, G10L 15/04, G10L 15/10, G10L 15/26, G01C 21/36

(54) **Verfahren zur Ermittlung einer Hypothesenliste aus einem Vokabular eines Spracherkennungssystems**
Method for determining a list of hypotheses from a vocabulary of a speech recognition system
Procédé destiné à la création d'une liste d'hypothèses à l'aide du vocabulaire d'un système de reconnaissance vocale

(30) Priorität: 20.06.2007 DE 102007028235
(43) Veröffentlichungstag der Anmeldung: 24.12.2008
(73) Patentinhaber: Svox AG, 8048 Zürich (CH)
(72) Erfinder: Heidenreich, Sabine, 85579 Neubiberg (DE)
(74) Vertreter: Büchel, von Révy & Partner

(56) Entgegenhaltungen:
- EP-A- 1 739 655
- DE-A1- 19 635 754
- US-A- 5 754 972

## Beschreibung

Die vorliegende Erfindung betrifft ein Verfahren und eine Datenverarbeitungsvorrichtung zur Ermittlung einer Hypothesenliste aus einem Vokabular eines Spracherkennungssystems.

Spracherkennungssysteme, die einzelne Wörter oder Wortketten aus einem vorgebbaren Vokabular erkennen können, werden üblicherweise zur Bedienung von Telefonapparaten oder von nicht sicherheitsrelevanten Komponenten der Ausstattung eines Kraftfahrzeugs durch gesprochene Kommandos benutzt. Weitere bekannte Beispiele betreffen die Bedienung von Operationsmikroskopen durch den operierenden Arzt und die Bedienung von Personalcomputern.

Bei der Bedienung eines Autonavigationssystems kann bspw. ein gewünschtes Navigationsziel durch Spracheingabe mitgeteilt werden. Eine besondere Herausforderung stellt dabei die Eingabe von Ortsnamen dar. In Deutschland gibt es zwischen 70000 und 80000 Orten, die als Ziel einer Autofahrt in Frage kommen. Die Lösung dieser Aufgabe mit einer Einzelworterkennung stellt wegen der fehlenden Kontextinformation eine immens hohe Anforderung an die Technologie des Spracherkennungssystems dar. Aus diesem Grund, aber auch zur Eingabe von Städtenamen, deren korrekte Aussprache dem Benutzer nicht bekannt ist, wie bspw. im Ausland, bieten sich Buchstabierlösungen an, bei denen der Benutzer aufgefordert wird, die ersten Buchstaben des gewünschten Zielortes zu sprechen.

In einem solchen Verfahren teilt ein Anwender einen Zielort dem Navigationssystem durch Anbuchstabieren mit. Anhand der erkannten Buchstabenfolge werden durch das Navigationssystem aus der Menge aller Orte diejenigen bestimmt, deren Anfangsbuchstaben der erkannten Buchstabenfolge ähneln. In einer Auswahlliste oder Hypothesenliste werden die Orte der Ähnlichkeit nach geordnet, dem Benutzer zur weiteren Auswahl angeboten. Der Anwender kann anschließend per Spracheingabe oder über eine Tastatur den gewünschten Zielort angeben.

Nachteilig bei diesem Verfahren ist, dass durch das System für eine eingegebene Buchstabenfolge eine große Anzahl von Einträgen in dem Vokabular des Spracherkennungssystems mit einer entsprechenden Ähnlichkeit identifiziert werden, und somit dem Benutzer nur eine sehr lange Hypothesenliste zur Auswahl vorgelegt werden kann. Erkennt der Benutzer dann, dass die Anzahl der von ihm gesprochenen Buchstaben offensichtlich noch nicht ausreicht, bleibt ihm nur übrig, durch erneutes Drücken einer sogenannten Push-to-Talk-Taste die Erkennung erneut zu starten und eine größere Anzahl von Buchstaben zu sprechen.

US 5 754 972 zeigt eine Lösung, bei der Teilworte und Buchstaben zum Erkennen der Eingabe verwendet werden. Es muss jeweils zuerst entschieden werden, was eingegeben wird. Dieses Verfahren ist nicht benutzerfreundlich.

Der vorliegenden Erfindung stellt sich somit die Aufgabe, ein Verfahren zur Ermittlung einer Hypothesenliste aus einem Vokabular eines Spracherkennungssystems anzugeben, durch das eine sichere und schnelle Anwendung durch einen Benutzer ermöglicht wird.

Erfindungsgemäß wird diese Aufgabe durch ein Verfahren und eine Datenverarbeitungsvorrichtung mit den in Anspruch 1 und Anspruch 8 angegebenen Merkmalen gelöst. Vorteilhafte Weiterbildungen der vorliegenden Erfindung sind in den abhängigen Ansprüchen angegeben.

Im Verfahren zur Ermittlung einer Hypothesenliste wird aus einem Vokabular eines Spracherkennungssystems durch einen Benutzer ein Beginn eines zu erkennenden Wortes durch einzelne Buchstabenfolgen und durch Teilworte eingegeben. Die erkannten Buchstabenfolgen und Teilwörter werden in der Reihenfolge ihrer Eingabe zu einer erkannten Eingabe zusammengesetzt. Abstandsmaße für eine Ähnlichkeit zwischen der erkannten Eingabe und Einträgen des Vokabulars des Spracherkennungssystems werden ermittelt. Schließlich wird eine Hypothesenliste mit den ermittelten Einträgen dem Benutzer auf einem Anzeigemittel zur Auswahl dargestellt.

In der vorliegenden Erfindung wird vorgeschlagen, zur Erkennung von Worten aus einer bekannten Liste gemischter Ressourcen heranzuziehen. Die aus Buchstaben und Teilworten bestehende Eingabe kann mit Hilfe von String-Matching-Algorithmen zu einer Liste der wahrscheinlichsten Worte verarbeitet werden. Die gemischten Ressourcen werden im Vorfeld bei der Erzeugung des Systems hergestellt. Mischressourcen beinhalten Buchstabierressourcen angereichert mit einer Auswahl von Worten, denen allgemeine Ganzwortressourcen zugrunde liegen. Dazu müssen zunächst die häufig auftretenden Teilworte aus einer Gesamtliste extrahiert werden. Diese Teilworte werden so gewählt, dass sie sprechbar und für den Benutzer nachvollziehbar sind. Beispielsweise können hierzu alle in einer Wortliste der jeweiligen Sprache vorkommenden Worte mit einer Liste von Städtenamen verglichen werden. Auf diese Weise werden bspw. Teilwörter wie "hausen", "unter" oder "ober" in die gemischte Ressource aufgenommen.

Gemäß einer weiteren Ausgestaltung der vorliegenden Erfindung werden zur Ermittlung von Abstandsmaßen für eine Ähnlichkeit zwischen der erkannten Eingabe und Einträgen des Vokabulars Abstandswerte für eine Ähnlichkeit zweier Buchstaben und für eine Ähnlichkeit zweier Teilwörter ermittelt. Für das Abstandsmaß eines Vokabulareintrags werden die Abstandswerte für den jeweiligen Vokabulareintrag zusammengezählt.

Eine weitere Möglichkeit ein Abstandsmaß für die Ähnlichkeit zwischen der erkannten Eingabe und Einträgen des Vokabulars zu ermitteln ist die Verwendung eines Levenshtein-Abstandes als Abstandsmaß, bspw. unter der Nebenbedingung, dass das Buchstabieren mitten im Wort abbrechen darf.

Der Levenshtein-Abstand ist ein Maß für den Unterschied zwischen zwei Zeichenketten als minimaler Anzahl atomarer Veränderungen, die notwendig sind, um die erste Zeichenkette in die zweite Zeichenkette umzuformen. Atomare Veränderungen sind bspw. das Einfügen, das Löschen und das Ersetzen eines einzelnen Buchstabens. Üblicherweise ordnet man den atomaren Veränderungen Kosten zu und erhält somit durch Zusammenzählen der einzelnen Kosten ein Maß für den Abstand bzw. die Ähnlichkeit zweier Zeichenketten.

Gemäß einer weiteren vorteilhaften Ausgestaltung der vorliegenden Erfindung werden neben der Hypothesenliste auch die erkannten Buchstabenfolgen und Teilwörter auf dem Anzeigemittel dargestellt. Dadurch kann dem Benutzer in vorteilhafter Weise eine Rückmeldung gegeben werden, wie viele Buchstabenfolgen und Teilwörter richtig erkannt wurden.

Die Datenverarbeitungsvorrichtung weist eine Spracherkennungseinheit auf, welche zur Ermittlung einer Hypothesenliste aus einem Vokabular der Spracherkennungseinheit eine Benutzereingabe eines Beginns eines zu erkennenden Wortes durch einzelne Buchstabenfolgen und durch Teilworte bereitstellt. Die erkannten Buchstabenfolgen und Teilwörter werden durch die Spracherkennungseinheit in der Reihenfolge ihrer Eingabe zu einer erkannten Eingabe zusammengesetzt. Schließlich ermittelt die Spracherkennungseinheit Abstandsmaße für eine Ähnlichkeit zwischen der erkannten Eingabe und Einträgen des Vokabulars des Spracherkennungssystems. Weiterhin weist die Datenverarbeitungsvorrichtung ein Anzeigemittel auf, welches einer Hypothesenliste mit den ermittelten Einträgen dem Benutzer zur Auswahl darstellt.

Die vorliegende Erfindung wird nachfolgend an Ausführungsbeispielen anhand der Zeichnungen näher erläutert. Es zeigen
- Figur 1: eine schematische Darstellung eines Verfahrens zur Generierung einer gemischten Ressource für das erfindungsgemäße Spracherkennungsverfahren,
- Figur 2: eine schematische Darstellung eines Verfahrensablaufs zur Ermittlung einer Hypothesenliste aus einem Vokabular eines Spracherkennungssystems,
- Figur 3a, 3b: eine schematische Darstellung eines möglichen Verlaufs einer Interaktion zwischen einem Spracherkennungssystem und einem Benutzer nach dem Stand der Technik und gemäß dem erfindungsgemäßen Verfahren.

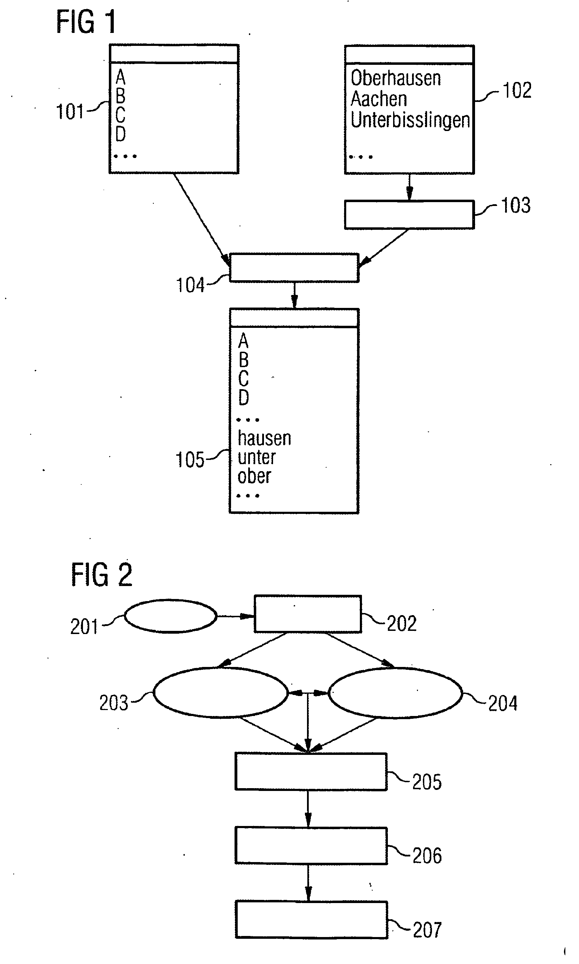

Figur 1 zeigt in einer schematischen Darstellung ein Verfahren zur Generierung der Mischressourcen für das erfindungsgemäße Verfahren zur Spracherkennung. Die Mischressourcen werden dabei üblicherweise im Vorfeld bei der Erzeugung des Systems ermittelt. Die Mischressourcen beinhalten Buchstabierressourcen 101, welche die gängigen alphanumerischen Zeichen der jeweiligen Sprache umfassen. Weiterhin werden Ganzwortressourcen, in diesem Beispiel eine Liste von deutschen Städtenamen 102, für die Mischressourcen herangezogen. Hierzu werden aus den Ganzwortressourcen 102 häufig benutzte Teilworte extrahiert 103. Diese Teilworte sollten so gewählt sein, dass sie sprechbar und für Benutzer nachvollziehbar sind. Beispielsweise werden alle Worte, die häufiger als ein bestimmter Grenzwert in Städtenamen der Städtenamenlisten enthalten sind und eine vorgebbare Mindestlänge aufweisen, in die Teilwortliste übernommen. Diese beiden Ressourcen werden zusammengefasst in eine Mischressource 104, so dass in der neu entstandenen Mischressource 105 sowohl die Buchstaben als auch die ausgewählten Teilworte enthalten sind. Die Teilworte bestehen in diesem Beispiel nur aus gültigen Buchstaben aus der Buchstabierressource.

Figur 2 zeigt in einer schematischen Darstellung einen beispielhaften Verfahrensablauf der Erfindung. Zunächst startet der Benutzer die Spracherkennung mit einer Mischressource. Dies kann bspw. durch Drücken der PTT-Taste (Push-to-Talk-Taste) 201 im entsprechenden Eingabedialog erfolgen oder sich durch den vorherigen Dialogschritt direkt ergeben. Das System signalisiert die Aufnahmebereitschaft für eine Buchstaben-Teilwort-Eingabe 202. Anschließend buchstabiert der Benutzer die ersten Buchstaben des gewünschten Navigationszieles 203 oder spricht ein Teilwort des gewünschten Navigationszieles ein 204. Selbstverständlich stehen dem Benutzer alle Kombinationen aus Buchstabeneingabe und Teilworteingabe zu Verfügung, um das gewünschte Navigationsziel einzugeben. Das Spracherkennungssystem sammelt alle Eingaben in der Reihenfolge, in der sie geäußert wurden 205. Anschließend berechnet das System eine Hypothesenliste von Worten einer Hintergrunddatenbank, welche auf Grundlage ihrer Ähnlichkeit zu der erkannten Buchstaben-Teilwort-Eingabe erstellt wird 206. Schließlich zeigt das System in der ersten Zeile des Anzeigemittels die erkannte Buchstaben- und Teilworteingabe in korrekter temporaler Reihenfolge und darunter die ermittelte Hypothesenliste 207 an.

Selbstverständlich ist die Erfindung nicht nur auf die sprachliche Eingabe von Navigationszielen beschränkt, sondern kann für jede Spracherkennung genutzt werden, bei der die gewünschten Wörter aus einer bekannten Hintergrundliste stammen. Weitere Beispiele sind die Eingabe von Adressbucheinträgen oder von Multimediatiteln (bspw. MP3 Titel).

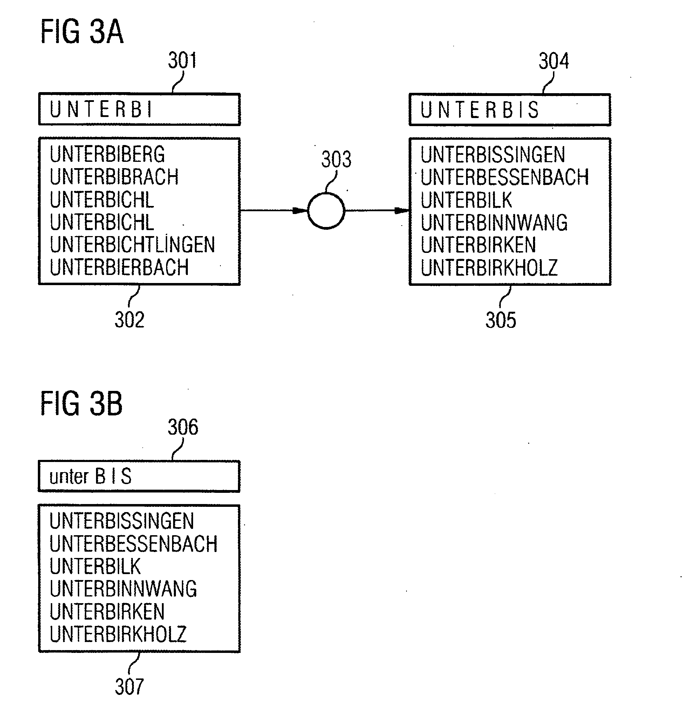

Figur 3a zeigt einen möglichen Verlauf einer Interaktion zwischen einem Spracherkennungssystem zu Eingabe eines Navigationszieles und einem Benutzer nach dem Stand der Technik. Zunächst wird der Benutzer durch das System aufgefordert die ersten Buchstaben des gewünschten Navigationszieles einzugeben. Das Spracherkennungssystem erkennt die Buchstaben "U-N-T-E-R-B-I" 301. Hieraufhin führt das System eine Buchstabiererkennung durch und sucht aus der Hintergrundliste aller deutschen Orte die ähnlichsten hinsichtlich der erkannten Buchstabenfolge heraus und stellt diese in einer Hypothesenliste dem Benutzer dar 302. An dieser Stelle erkennt der Benutzer, dass zur Identifikation seines gewünschten Navigationszieles "Unterbissingen" die Anzahl der von ihm gesprochenen Buchstaben noch nicht ausreicht. An dieser Stelle hat der Benutzer nur die Möglichkeit, durch erneutes Drücken der PTT-Taste 303 die Erkennung erneut zu starten und eine größere Anzahl von Buchstaben zu sprechen. Nach einer Eingabe der Buchstabenfolge "U-N-T-E-R-B-I-S" 304, lädt das Spracherkennungssystem auf Grundlage der erkannten Buchstabenfolge eine neue Hypothesenliste 305. Auf dieser ist das gewünschte Navigationsziel "Unterbissingen" an erster Stelle aufgeführt. Die Anzahl der zu sprechenden Buchstaben ist in diesem Fall mindestens acht.

Figur 3b zeigt in einer schematischen Darstellung einen möglichen Verlauf einer Interaktion zwischen dem erfindungsgemäßen Spracherkennungssystem und einem Benutzer. Zunächst wird der Benutzer durch das Spracherkennungssystem aufgefordert, sein gewünschtes Navigationsziel durch Eingabe von Buchstaben oder Teilwörtern anzugeben. Hieraufhin gibt der Benutzer das Teilwort "Unter" und die Buchstabenfolge "B-I-S" ein 306. Durch das Spracherkennungssystem wird die Eingabe "Unter B-I-S" erkannt und auf Grundlage der erkannten Eingabe eine Hypothesenliste erstellt. Die dem Benutzer dargestellte Hypothesenliste 307 führt das gewünschte Navigationsziel "Unterbissingen" an erster Stelle auf.

Folglich wird die Anzahl der vom Benutzer zu sprechenden Äußerungen, welche für eine korrekte Erkennung des Navigationszieles notwenig sind, erheblich reduziert. In dem dargestellten Beispiel reduziert sich die Anzahl der benötigten Äußerungen von acht auf vier. Die Erfindung ermöglicht es dem Benutzer die Äußerungen mehrerer Buchstaben zur Äußerung eines Teilwortes zusammenzufassen. Die Reihenfolge von Buchstaben- und Teilwortäußerungen des Benutzers ist beliebig. So wäre bspw. auch eine Eingabe in der Form "B-I Berg" oder "B-I Berg A-U" erlaubt.

Die vorliegende Erfindung ist nicht auf die hier beschriebenen Ausführungsbeispiele beschränkt.

## Patentansprüche

1. Verfahren zur Ermittlung einer Hypothesenliste aus einem Vokabular eines Spracherkennungssystems, bei dem
- durch einen Benutzer ein Beginn eines zu erkennenden Wortes durch einzelne Buchstabenfolgen und durch Teilworte eingegeben wird,
- die erkannten Buchstabenfolgen und Teilwörter in der Reihenfolge ihrer zeitlichen Eingabe zu einer erkannten Eingabe zusammengesetzt werden, wobei die Erkennung der Buchstabenfolgen und Teilwörter aus einem gemischten Erkennervokabular aus Buchstaben- und Teilwörtervokabular erfolgt,
- Abstandsmaße für eine Ähnlichkeit zwischen der erkannten Eingabe und Einträgen des Vokabulars des Spracherkennungssystems ermittelt werden, und
- eine Hypothesenliste mit den ermittelten Einträgen dem Benutzer auf einem Anzeigemittel zur Auswahl dargestellte wird

2. Verfahren nach Anspruch 1, wobei
zur Ermittlung von Abstandsmaßen für eine Ähnlichkeit zwischen der erkannten Eingabe und Einträgen des Vokabulars Abstandswerte für eine Ähnlichkeit zweier Buchstaben und für eine Ähnlichkeit zweier Teilwörter ermittelt werden und für das Abstandsmaß eines Vokabulareintrags die Abstandswerte des jeweiligen Vokabulareintrags zusammengezählt werden.

3. Verfahren nach Anspruch 2, wobei
Abstandswerte für eine phonetische Ähnlichkeit zweier Buchstaben und zweier Teilwörter ermittelt werden.

4. Verfahren nach einem der vorhergehenden Ansprüche, bei dem als Abstandsmaß ein Levenshtein-Abstand herangezogen wird.

5. Verfahren nach einem der vorhergehenden Ansprüche, bei dem neben der Hypothesenliste auch die erkannten Buchstabenfolgen und Teilwörter auf dem Anzeigemittel dargestellt werden.

6. Verfahren nach Anspruch 5, bei dem
- nicht eindeutig erkannte Buchstaben und Teilwörter
- oder Buchstaben und Teilwörter, für die an der jeweiligen Stelle ähnliche Buchstaben und Teilwörter im Vokabular vorliegen,
auf dem Anzeigemittel durch ein vorgebbares Symbol
**gekennzeichnet** werden.

7. Verfahren nach Anspruch 1, bei dem
durch den Benutzer Navigationsziele, Multimediatitel und/oder Adressbucheinträge eingegeben werden.

8. Datenverarbeitungsvorrichtung, aufweisend eine Spracherkennungseinheit zur Ermittlung einer Hypothesenliste aus einem Vokabular der Spracherkennungseinheit, wobei die Spracherkennungseinheit derart ausgebildet ist*,* dass zur Ermittlung der Hypothesenliste
- eine Benutzereingabe eines Beginns eines zu erkennenden Wortes durch einzelne Buchstabenfolgen und durch Teilworte bereitgestellt wird,
- die erkannten Buchstabenfolgen und Teilwörter in der Reihenfolge ihrer Eingabe zu einer erkannten Eingabe , wobei die Datenverarbeitungsvorrichtung ein gemischtes Erkennervokabular aus Buchstaben- und Teilwörtervokabular umfasst und die Spracherkennungseinheit derart ausgebildet ist, dass die Erkennung der Buchstabenfolgen und Teilwörter aus dem gemischten Erkennervokabular aus Buchstaben- und Teilwörtervokabular erfolgt,
- Abstandsmaße für eine Ähnlichkeit zwischen der erkannten Eingabe und Einträgen des Vokabulars des Spracherkennungssystems ermitteltelt werden, und und ein Anzeigemittel, derart ausgebildet, dass
- eine Hypothesenliste mit den ermittelten Einträgen dem Benutzer zur Auswahl dargestelt wird.

## Claims

1. A method for determining a list of hypotheses from a vocabulary of a speech recognition system, in which
- the start of a word to be recognised is entered by individual succession of letters and by partial words by a user,
- the recognised successions of letters and partial words are assembled in the order of their chronological input to a recognised input, wherein recognising the successions of letters and partial words is effected from a mixed recogniser vocabulary of letter vocabulary and partial word vocabulary,
- distance measures for similarity between the recognised input and entry of the vocabulary of the speech recognition system are determined, and
- a hypothesis list including the determined entries is indicated to the user for selection by display means.

2. Method according to claim 1, wherein
distance measures for similarity of two letters and for similarity of two partial words are determined for determining the distance measures for similarity between the recognised input and entry of the vocabulary, and the distance values of the respective vocabulary entry are summed up for the distance measure of a vocabulary entry.

3. Method according to claim 2, wherein
distance values for a phonetic similarity of two letters and two partial words are determined.

4. Method according to any of the preceding claims, in which a Levenshtein distance is drawn on so as a distance measure.

5. Method according to any of the preceding claims, in which, apart from the hypothesis list, the recognised letter and partial words are displayed too on the display means.

6. Method according to claim 5, in which
- ambiguously recognised letters and partial words
- or letters and partial words for which similar letters and partial words exist at the respective place in the vocabulary,
are **characterised** on the display means by a predetermined symbol.

7. Method according to claim 1, in which
navigation destinations, multimedia titles and/or directory entries are inputted by the user.

8. Data processing device comprising a speech recognition unit for determining a hypothesis list from a vocabulary of said speech recognition unit, wherein said speech recognition unit is designed that for determining said hypothesis list
- a user input of the start of a word to be recognised is provided by individual letters and by partial words
- the recognised successions of letters and partial words are assembled in the order of their input to a recognised input, wherein said data processing device comprises a mixed recognising vocabulary of letter vocabulary and partial words vocabulary and said speech recognition unit is designed that recognition of the succession of letters and partial words follows from the mixed recognising vocabulary from letter vocabulary and partial words vocabulary,
- distance measures for similarity between the recognised input and entry of the vocabulary of the speech recognition system are determined, and
- display means are designed that a hypothesis list including the determined entries are displayed to the user for selection.

## Revendications

1. Procédé destiné à la création d'une liste d'hypothèses à l'aide du vocabulaire d'un système de reconnaissance vocale, dans lequel
- un commencement d'un mot à reconnaître est entré à l'aide des successions individuelles de lettres et des mots partiels par un utilisateur,
- les successions de lettres et les mots partiels reconnus sont assemblés en ordre de son entrée dans le temps à une entrée reconnue, dans lequel la reconnaissance des successions de lettres et des mots partiels est réalisée à l'aide d'un vocabulaire de reconnaissance mixte d'un vocabulaire de lettres et d'un vocabulaire des mots partiels,
- des mesures de distances pour une similarité entre l'entrée reconnue et les inscriptions du vocabulaire du système de reconnaissance vocale sont déterminée, et
- une liste d'hypothèses comprenant les inscriptions déterminées est indiquée à l'utilisateur par un moyen d'indication.

2. Procédé selon la revendication 1, dans lequel pour la détermination des mesures de distances pour une similarité entre l'entrée reconnue et les inscriptions du vocabulaire, des valeurs de distance sont déterminés pour une similarité de deux lettres et pour une similarité de deux mots partiels, et les valeurs de l'inscription pour la mesure de distance d'une inscription respective de vocabulaire sont totalisées pour la mesure de distance d'une inscription de vocabulaire.

3. Procédé selon la revendication 2, dans lequel des valeurs de distance pour une similarité phonétique de deux lettres et deux mots partiels sont déterminées.

4. Procédé selon une quelconque des revendications précédentes, dans lequel une distance Levenshtein est réquisitionnée comme la mesure de distance.

5. Procédé selon une quelconque des revendications précédentes, dans lequel outre la liste d'hypothèses, ce sont les successions de lettres et les mots partiels reconnus que sont indiqué par le moyen d'indication.

6. Procédé selon la revendication 5, dans lequel
- les lettres et les mots partiels, qui ne sont pas reconnus d'une façon univoque
- ou les lettres et mots partiels, pour lesquels des lettres et mots partiels similaires existent à la place respective dans le vocabulaire,
sont marqués au moyen d'indication par un symbole prédéterminé.

7. Procédé selon la revendication 1, dans lequel des destinations de navigation, des titres multimédia et/ou des inscriptions de répertoire d'adresses sont entré par l'utilisateur.

8. Dispositif de traitement de données comprenant une unité de reconnaissance vocale pour créer une liste d'hypothèses à l'aide d'un vocabulaire de l'unité de reconnaissance vocale, dans lequel l'unité de reconnaissance vocale est formée de sorte, que pour la création de la liste d'hypothèses
- une entrée d'utilisateur d'un commencement d'un mot à reconnaître est préparée par des successions individuelles de lettres et par des mots partiels
- les successions de lettres et les mots partiels reconnus sont assemblés en ordre de son entrée dans le temps à une entrée reconnue, dans lequel le dispositif de traitement de données comprend un vocabulaire de reconnaissance mixte d'un vocabulaire de lettres et d'un vocabulaire des mots partiels et l'unité de reconnaissance vocale est formée de sorte, que la reconnaissance des successions de lettres et des mots partiels est effectuée à l'aide du vocabulaire de reconnaissance mixte du vocabulaire de lettres et du vocabulaire des mots partiels
- des mesures de distances pour une similarité entre l'entrée reconnue et les inscriptions du vocabulaire du système de reconnaissance vocale sont déterminée, et
- une liste d'hypothèses comprenant les inscriptions déterminées est indiquée à l'utilisateur par un moyen d'indication.
